# EUROPEAN PATENT SPECIFICATION

(11) **EP 3 339 375 B1**
(45) Date of publication and mention of the grant of the patent: **02.10.2019**
(21) Application number: 18150882.1
(22) Date of filing: 08.02.2011
(51) Int. Cl.: C08L 83/04, C08L 27/16, C08L 27/18, C08L 67/02, C08K 7/22

(54) **REINFORCED ELASTOMERS**
VERSTÄRKTE ELASTOMERE
ÉLASTOMÈRES RENFORCÉS

(30) Priority: 25.02.2010 US 712621
(43) Date of publication of application: 27.06.2018
(62) Divisional of application: 11747848.7
(73) Proprietor: W.L. Gore & Associates, Inc, Newark, DE 19714 (US)
(72) Inventor: SULLIVAN, James P., Lincoln University, PA 19352 (US); MCMANAWAY, Michael, Cecilton, MD 21913-0010 (US)
(74) Representative: HGF Limited

(56) References cited:
- EP-A2- 0 256 748
- WO-A1-97/03812
- WO-A1-99/41071
- US-A- 4 882 113
- US-A- 5 646 192

## Description

### FIELD OF THE INVENTION

The present invention relates to elastomers, and more specifically, to reinforced elastomers.

### BACKGROUND OF THE INVENTION

Elastomers have long been used in applications requiring the use of soft, conformable resilient materials. Such applications include gaskets, seals, roller pump tubing, diaphragms, self-sealing devices (including medical devices such as access ports and vascular access grafts), and the like. Silicone is one of the most commonly used elastomers. Viton® fluoroelastomer is commonly used in applications requiring thermal and chemical resistance.

Elastomers can be cross-linked to provide a large range of hardness, as characterized by durometer values. Even high durometer and high tensile strength elastomers suffer from poor tear strength and high elongation under stress. Fillers, such as glass fibers and silica, can be added to the elastomer prior to cross-linking in order to improve these properties. These improvements, however, do not render the composite materials sufficiently strong and/or durable for use in demanding applications. Furthermore, other properties such as elongation, hardness or resilience, may be compromised by the addition of fillers.

Elastomers also suffer from poor durability under repetitive mechanical stresses, such as tensile, compressive, bending and shear stresses. These stresses arise in roller pump tubing, diaphragms, and other applications. Combining an elastomer with other materials has been shown to improve the in-use performance in these applications. USP 6,673,455 described a composite comprising a plurality of ePTFE layers impregnated with at least one elastomer wherein the impregnated layers were adhered together by layers of elastomer. The enhanced strength afforded by layers of ePTFE significantly improves the durability of roller pump tubing and other articles.

Others have mixed stretched porous resin fragments or particles into a resin matrix. Suzuki et al. (USP 4,454,249) described creating reinforced plastic compositions by mixing stretched porous resin fragments of polypropylene, polyethylene or PTFE resins into a resin matrix and subsequently melt-extruding the compositions. The patent describes PTFE and tetrafluoroethylene-perfluoroalkyl vinyl ether copolymer resin matrixes. The patent is silent regarding the creation of an elastomer composition. Examples I and II are comprised of stretched porous PTFE resin fragments mixed with PTFE, a composition in which neither component is elastomeric. The remaining example, Example III, teaches the preparation of a high-pressure hose, an article in which elastomeric properties are decidedly undesirable.

Hatakeyama et al. (USP 4,770,922) mixed minute fragments of expanded, porous PTFE into another resin to form a composite printed circuit board. The other resin could be epoxy, polyester, or another similar resin. The patent does not teach the use of elastomers, which would be decidedly undesirable in a printed circuit board.

EP 0 256 748 discloses a composite material comprising unsintered PTFE polymer and an elastomer which is expanded and oriented and having a porous fibrillated structure.

US 4,882,113 discloses a process for manufacturing an article from a heterogeneous composition of unsintered porous PTFE particles and a fluoroelastomer, comprising mixing particulate unsintered porous PTFE particles and fluoroelastomer.

US 5,646,192 discloses a polymeric molding resin comprising comminuted, sheared, and ground elongated particulate and being made of expanded porous polytetrafluoroethylene.

WO 99/41071 discloses a composite comprising a plurality of expanded PTFE layers which are impregnated with an elastomer, the impregnated layers being adhered together by layers of elastomer.

WO 97/03812 discloses a process for providing a shaped article which comprises imbibing a solution of a curable elastomeric material into the pores of an expanded porous PTFE structure, removing the solvent, shaping the structure, compressing the shaped structure to force any air inside the pores out, and curing the elastomeric material.

### SUMMARY OF THE INVENTION

The present invention provides a composition comprising an elastomer and discrete pieces of porous material of polytetrafluoroethylene (PTFE) distributed throughout said elastomer, wherein the porous material comprises expanded polytetrafluoroethylene (ePTFE) and the ePTFE material is a membrane, as defined in claim 1.

In another aspect, the present invention provides a process for making a reinforced elastomer composition by the steps of:
(a) providing an elastomer;
(b) providing an expanded PTFE membrane;
(c) chopping the expanded PTFE membrane into discrete pieces; and
(d) blending the discrete pieces into the elastomer using a shear mixer to form the reinforced elastomer.

The reinforced elastomer is then preferably extruded or injection molded into a desired shape.

Moreover the present invention provides the use of a composition as defined in claim 1 for forming a flat sheet, an O-ring, a gasket, a diaphragm, a mechanical seal or a vascular graft and the of the composition as defined in claim 1 for injection molding, compression molding and extrusion. Furthermore, the present invention provides a flat sheet, an O-ring, a gasket, a diaphragm, a mechanical seal or a vascular graft comprising the composition according to claim 1.

### BRIEF DESCRIPTION OF THE DRAWINGS

Figure 1 is an optical micrograph of a cross-section of an exemplary embodiment of a composition according to the present invention.
Figure 2 is an optical micrograph of a cross-section of an exemplary embodiment of a composition according to the present invention.
Figure 3 is an optical micrograph of a cross-section of an exemplary embodiment of a composition according to the present invention.

### DETAILED DESCRIPTION OF THE INVENTION

The present invention relates to high strength elastomer compositions comprising discrete pieces of strong, porous material distributed throughout an elastomer. As used herein, "discrete pieces" means a plurality of pieces of material, specifically excluding powders and continuous layers. Articles of the present invention have surprisingly increased tear strength, increased tensile strength, increased tensile stress for a given elongation, increased toughness, and/or increased durability compared to the same unfilled elastomers or elastomers filled with pieces of other materials. Furthermore, articles of the present invention exhibit a unique combination of flexibility and strength. The porous pieces of material become wetted with elastomer during the blending process, which contributes to the surprising improvement in strength and durability. The terms "blending" and "mixing" are used interchangeably herein. Unlike processes that involve the use of continuous layers of porous membranes, the process of the present invention enables strength reinforcement in all directions due to the distribution of the pieces of material throughout the elastomer. Furthermore, the ability to achieve superior mechanical properties by eliminating an additional adhering step offers significant manufacturing advantages over alternative processes in the prior art. Another important advantage derived from the present invention is the processability of the reinforced elastomer, such as the ability to injection mold it into a wide variety of shapes. Molding can be performed without the addition of heat.

The mixing process is performed under suitable conditions and for sufficient time in order to fill the void space of the porous pieces of material with elastomer and to well-distribute the pieces throughout the elastomer. The mixture of elastomer and porous material is visually examined during the mixing process and after creating an article to ensure that these criteria are met.

A variety of fillers can be used. Porosity is a key attribute of fillers of the present invention. Porous PTFE is preferred and ePTFE is most preferred because it provides the most surprisingly beneficial combination of properties of strength, durability and processability. Preferred ePTFE pieces have been amorphously locked. Other fillers such as porous polyester can alternatively be used.

Although any shape may be used, substantially flat filler pieces are preferred. Various shapes of substantially flat pieces can be used. The size of the pieces should be optimized for the size of the desired article. For example, 1.3 cm square flat pieces of 0.02 mm thick ePTFE are useful for flat sheet articles of about 2.1 mm thickness. Alternatively, fillers with high aspect ratios can be used.

The preferred elastomer depends on the application of the final article. Preferred elastomers include silicone, fluoroelastomer (such as Viton Fluoroelastomer), perfluoroelastomer (such as Kalrez Perfluoroelastomer), and perfluoropolyether (such as Sifel perfluoropolyether).

Because of the unique processability of the reinforced elastomers of the present invention, a variety of articles can be produced, including pump tubing, O-rings, diaphragms, self-sealing devices (including medical devices such as access ports and vascular access grafts), and the like.

Additional additives can be incorporated into the reinforced elastomer of the present invention. These additives can be included to improve processability or final article properties. Such additives include but are not limited to porosity generators, anticorrosion agents, viscosity modifiers, conductive agents, and wetting agents.

The mixed elastomer of the present invention can be adapted in the same or similar ways as the elastomer component of the mixture. For example, the inventive mixed elastomer can be combined with other layers such as pressure-sensitive adhesives for gasket applications and can be injection molded as a covering for another material.

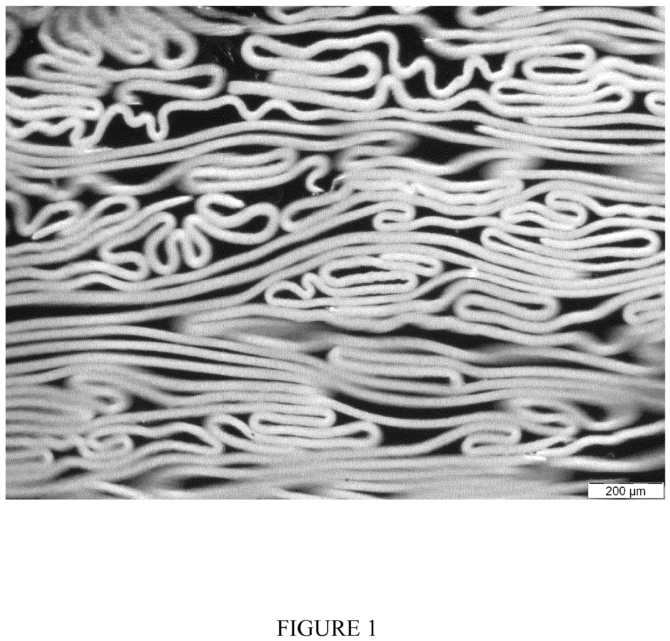

The inventive article of Example 1 comprises discrete pieces of ePTFE membrane mixed with silicone elastomer and subsequently molded into the shape of a flat sheet. The mixing process was performed at least until the stacked pieces of ePTFE were well-distributed throughout the elastomer and believed to be fully wetted by the elastomer. The final flat sheet article exhibited high maximum tensile strength combined with a relatively low elongation at the maximum tensile strength (12.3 MPa and 223%, respectively), hence a high tensile modulus. Figure 1 is an optical micrograph of a cross-section of this article. The figure demonstrates the distribution of the discrete pieces of ePTFE within the elastomer. The white portions are discrete pieces of ePTFE, the dark areas are the silicone elastomer. Note the folds in the ePTFE pieces. The flat sheet article was constructed by placing a ball of the elastomer mixture into the center of one of the mold plates then pressing the mold plates together and securing them in place, which caused the ball to flatten and spread. This process imparts a radial orientation of the pieces in the plane of the flat sheet. The strength of this article was substantially higher than that of the elastomer of Comparative Example A which was processed in the same way as the material in Example 1 save for not containing any filler. For the article of Comparative Example A, the maximum tensile strength and elongation at the maximum tensile strength were 5.5 MPa and 415%, respectively. Both the maximum tensile strength and the tensile modulus were significantly higher for the inventive material. The maximum tensile strength of the inventive Example 1 is approximately 224% higher than the base elastomer of Comparative Example A. The commercially available silica-filled silicone elastomer of Comparative Example B was molded into a flat sheet in the same manner as the filled elastomer of Example 1. For the article of Comparative Example B, the maximum tensile strength and elongation at the maximum tensile strength were 8.6 MPa and 834%, respectively. Again, both the maximum tensile strength and the tensile modulus were significantly higher for the inventive material. Furthermore, the tear strength of the inventive article of Example 1 was 95.3 kg/cm, significantly higher than that of the articles of Comparative Examples A and B (5.0 kg/cm and 24.7 kg/cm, respectively).

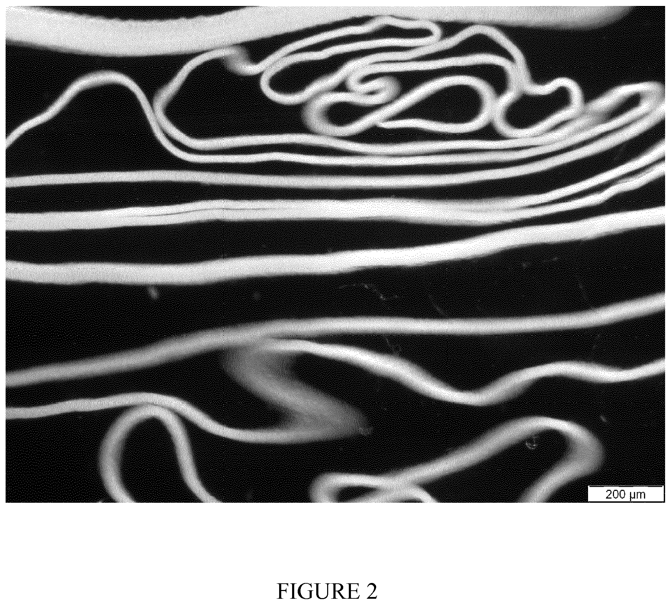

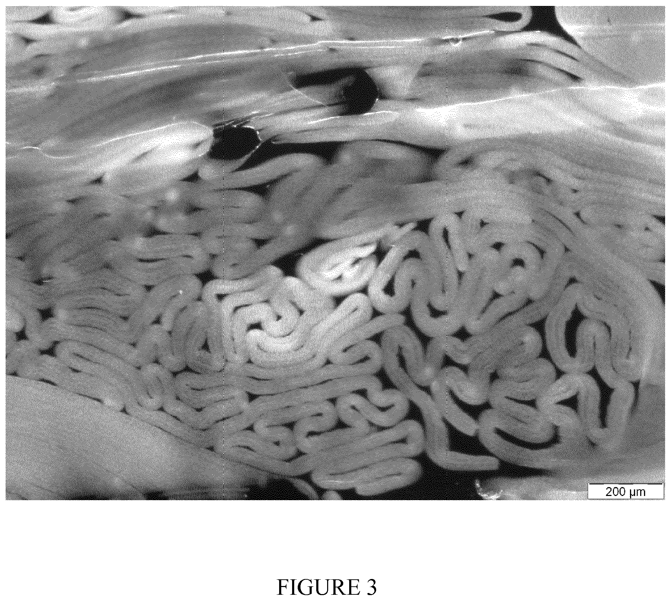

The inventive articles of Examples 2a and 2b were made in the same manner as the article in Example 1 except that instead of a volume percent filler of 16.4%, the volume percent filler of Examples 2a and 2b was 4.8% and 23.4%, respectively. Figures 2 and 3 are optical micrographs of cross-sections of the articles of Examples 2a and 2b, respectively. The figures demonstrate the distribution of the discrete pieces of ePTFE within the elastomer. The flat sheets of Example 1 made with 16.4% volume filler exhibited higher maximum tensile strength (12.3 MPa) compared to those for the articles of Examples 2a and 2b (5.0 MPa and 8.2 MPa, respectively). The same trend applied to tear strength. The flat sheets with 16.4% volume filler exhibited higher tear strength (95.3 kg/cm) compared to those for the articles of Examples 2a and 2b (30.3 kg/cm and 77.4 kg/cm, respectively). Even though the inventive articles of Examples 2a and 2b were weaker than the inventive article of Example 1, they exhibited higher tear strength and higher tensile strength at 50% elongation than articles of Comparative Examples A and B.

For high volume percent loadings of ePTFE, the void space in the ePTFE structure is not completely filled with elastomer. That is, the volume of the void space in the ePTFE structure exceeds the volume of elastomer. The final mixture has less than optimal strength. For low percent loading volumes of ePTFE, the volume of elastomer exceeds the volume void space of the ePTFE to such a high degree that the final mixture has less than optimal strength.

Preferably, the void volume of the discrete filler pieces is less than the volume of the elastomer, but not so low a void volume as to result in diminished strength.

A tube of the present invention, as described in Example 3, was made by mixing discrete pieces of ePTFE membrane with silicone elastomer, then injection molding the filled elastomer around a mandrel, and subsequently rotating the mandrel. Rotating the mandrel served to circumferentially orient the discrete pieces of ePTFE. Orienting the discrete pieces provides additional strength benefits. The tube was subjected to the later-described roller pump test and survived 14 million cycles (where one cycle corresponds to one pump rotation) prior to failure. In comparison, a tube made in the same manner but without the inclusion of the discrete pieces of ePTFE and without rotating the mandrel (i.e., the article of Comparative Example C) survived only 4,200 cycles. The commercially available silica-filled silicone tubing of Comparative Example D survived 9,000 cycles.

It is preferable to rotate the mandrel upon which roller pump tubing is created prior to cross-linking. This technique circumferentially aligns the discrete piece, thereby enhancing radial strength of the tubing and dispersing the pieces so that there are no radial sections comprised entirely of elastomer. The circumferential alignment is evidenced by the relative absence of folding in the discrete pieces. The result is improved tubing burst pressure and improved in-use durability. This process also lends itself well to the manufacture of tubing for other applications, such as high-pressure transfer tubing.

The present invention also enables the creation of special tubing configurations designed to enhance product performance. For example roller pump tubing can be manufactured in a U-shaped configuration to aid installation and minimize stresses on the tubing during use. High strength end fittings and raised portions on the outer tubing surface to assist in inhibiting tubing movement can also be molded as the tubing is being manufactured thereby eliminating additional process steps.

An inventive flat sheet material, as described in Example 4, was constructed using discrete pieces of ePTFE membrane mixed with Viton® fluoroelastomer. Another flat sheet material, per Comparative Example E, was made in the same manner as described in Example 4, but omitting the inclusion of discrete pieces of ePTFE. The inventive material of Example 4 exhibited a far higher tear strength (92.9 kg/cm) as compared to that of the article of Comparative Example E (25.1 kg/cm) and exhibited substantially higher tensile strength at both 50% and 100% elongation.

Furthermore, despite having a lower maximum tensile strength at ambient temperature, the inventive material exhibited a far higher maximum tensile strength (6.2 MPa) at 125 deg C as compared to that of the article of Comparative Example E (4.0 MPa) at 125 deg C.

The following examples are intended to illustrate embodiments of the present invention, but not to limit it in any way. Rather, the invention is to be given its full scope as defined in the appended claims.

### EXAMPLES

### Testing Methods

### Tensile Strength and Modulus Testing

Tensile strength testing of ePTFE membrane samples was performed using a crosshead speed of 50.8 cm/min and a jaw separation of 5.08 cm. Tensile strength testing of ePTFE fiber samples was performed using a crosshead speed of 25.4 cm/min and a jaw separation of 25.4 cm.

Matrix tensile strength of the ePTFE membrane samples was calculated by multiplying the tensile strength by the ratio of the density of non-porous PTFE (2.2 g/cc) to the bulk density of the expanded material.

Fiber Denier (grams per 9,000 meters) was calculated by measuring the weight of the 9 meters of fiber in grams, then multiplying that value by 1,000.

The following procedures were followed for tests of elastomer-based samples described in the examples. Dog bone-shaped samples were cut from flat sheets in accordance with the dimensions set forth in Figure 2 of ASTM D 412-06a (Die D-412-C-Imp, ODC Tooling & Molds, Batavia, IL). That is, the gage length was 3.3 cm and the sample width was 6 mm. Tests were performed on a tensile test machine (Model 5567, Instron, Norwood, MA) using the following conditions: 7.6 cm grip separation and 30.5 cm/min cross-head speed.

Tensile testing was also performed at 125 deg C. A heated chamber (Enviromental Chamber Model 3119-006, Instron, Norwood, MA) was added to the above-mentioned tensile test machine to surround the test sample during the test.

Tensile strength testing of tubing samples was performed using a crosshead speed of 30.5 cm/min, a gage length of 5.1 cm, and a jaw separation of 5.1 cm.

The tensile strength was calculated using the peak force value. Percent elongation at maximum tensile strength, tensile strength at 50% elongation, and tensile strength at 100% elongation were also calculated in order to characterize the modulus of the elastomer material. Flat sheet thickness was measured using a thickness gauge (Model MT 60M, Heidenhain Corporation, Schaumburg, IL) and tubing wall thickness was measured using a caliper (Starrett electronic slide caliper model 797B-12/300, LS Starrett Corporation, Athol, MA)

Tensile strength values were reported as the averaged results from 3 samples. Percent elongation at maximum tensile strength, tensile strength at 50% elongation, and tensile strength at 100% elongation values were reported for a single sample.

### Density Testing

A circular cutting tool was used to create a 11.3 cm diameter sample. The sample was weighed and its thickness was measured. The density was calculated as the mass of the sample divided by the product of the sample area and thickness. Density values were reported as the averaged results from 3 samples.

### Tear Testing

Dog bone-shaped samples were cut from flat sheets in accordance with the dimensions set forth in Figure 1 of ASTM D 624-00 (Reapproved 2007) (Type D-624-B-Slit-IMP, ODC Tooling & Molds, Batavia, IL). That is, the gage length was 68 mm, the minimum sample width (dimension G) was 10.2 mm, the outside radius (dimension E) was 43 mm, and the internal radius (dimension F) was 12.5 mm.

Tests were performed on a tensile test machine (Model 5567, Instron, Norwood, MA) using the following conditions: 7.6 cm grip separation and 30.5 cm/min cross-head speed. The tear strength was calculated by dividing the peak force value by the thickness of the test sample. Tear strength was reported as the averaged results from 3 samples.

### Bubble Point Testing

The ethanol bubble point (EBP) was measured according to the general teachings of ASTM F31 6-03 using a Capillary Flow Porometer (Model CFP 1500 AEXL from Porous Materials Inc., Ithaca, NY). The sample membrane was placed into the sample chamber and wet with SilWick Silicone Fluid (available from Porous Materials Inc.) having a surface tension of 20.1 dynes/cm. The bottom fixture of the sample chamber had a 2.54 cm diameter, 3.175 mm thick porous metal disc insert (Mott Metallurgical, Farmington, CT, 40 micron porous metal disk) and the top fixture of the sample chamber had a 3.2 mm diameter hole. Using the Capwin software version 7.73.012 the following parameters were set as specified in the table immediately below. The values presented for bubble point are the average of three measurements.

| Parameter | Set Point | | Parameter | Set Point |
|---|---|---|---|---|
| maxflow (cc/m) | 200000 | | mineqtime (sec) | 30 |
| bublflow (cc/m) | 100 | | presslew (cts) | 10 |
| F/PT (old bubltime) | 50 | | flowslew (cts) | 50 |
| minbppres (PSI) | 0 | | eqiter | 23 |
| zerotime (sec) | 1 | | aveiter | 20 |
| v2incr (cts) | 10 | | maxpdif (PSI) | 0.1 |
| preginc (cts) | 1.25 | | maxfdif (cc/m) | 50 |
| pulse delay (sec) | 2 | | sartp (PSI) | 1 |
| maxpre (PSI) | 110 | | sartf (PSI) | 500 |
| pulse width (sec) | 0.2 | | read_delay (sec) | 0 |

### Durometer Testing

Durometer measurements were made in accordance with the manufacturer's instructions using a hand held Shore A Durometer tester model HT-6510A, Colead Industrial Company Limited, Heilongjiang, China. Durometer values were reported as the averaged results from 3 samples.

### Roller Pump Test

A Master-Flex LS peristaltic pump (Cole-Parmer Vernon Hills, IL) was obtained. The pump was fitted with an adjustable occlusion pump head (Master Flex easy-load II Model 77201-62 Cole-Parmer Vernon Hills, IL). A 42.5 L high density polyethylene tank was obtained and filled with water.

One end of a length of reinforced silicone tubing was fitted with a quick connect fitting. The other end of the tube was submerged in the water. A test section of tubing was attached to the quick connect fitting of this tube and the tube to be tested was positioned inside the pump head. The other end of the test section of tubing was connected to a quick connect fitting attached to high pressure flexible hose, which in turn, was connected to (Swagelok ¼" (0.64 cm), FNPT Stainless steel fittings Swagelok, Solon, OH).

A flow meter (ECOLAB Oval gear meter Plus, ECOLAB Engineering GmbH 83309 Siegsdorf, Germany) was connected the Swagelok ¼" (0.64 cm), FNPT Stainless steel fittings. A pressure gage and a back pressure regulator (KBP1E0A4a5a20000, Swagelok, Solon, OH) was connected to the outflow of the pressure gauge with Swagelok ¼" (0.64 cm) FNPT Stainless steel fittings. A reinforced silicone tube was connected from the regulator back to the water tank.

Testing was performed in the following manner. With the occlusion gap set to a maximum, the pump head was closed. The pump was turned on and set to 600 rpm. The pressure regulator was set to 2.76 bar. The occlusion gap was decreased until a flow rate reached a maximum. The pressure regulator was readjusted to 2.76 bar.

Failure was defined as the number of cycles (revolutions) corresponding to a flow rate below 250 ml/min or test sample rupture, whichever occurred first. For a pump rate of 600 rpm, one hour of testing time corresponds to 36,000 cycles. The reported values represent results from one sample.
Table 1 and Table 2 summarize the compositions and the properties of the articles of the examples, respectively.

**TABLE 1**

| **Example** | **Elastomer** | **Filler** | **% Volume of the Composition** | **% Weight of the Composition** | **Article Shape** |
|---|---|---|---|---|---|
| 1 | silicone elastomer | ePTFE membrane | 16.4 | 30 | flat sheet |
| Comparative A | silicone elastomer | none | n/a | n/a | flat sheet |
| Comparative B | silicone elastomer | silica | not available | not available | flat sheet |
| 2a | silicone elastomer | ePTFE membrane | 4.8 | 10 | flat sheet |
| 2b | silicone elastomer | ePTFE membrane | 23.4 | 40 | flat sheet |
| 3 | silicone elastomer | ePTFE membrane | 16.4 | 30 | tube |
| Comparative C | silicone elastomer | none | n/a | n/a | tube |
| Comparative D | silicone elastomer | silica | n/a | n/a | tube |
| 4 | Viton elastomer | ePTFE membrane | 15.0 | 17 | flat sheet |
| Comparative E | Viton elastomer | none | n/a | n/a | flat sheet |
| 5 | silicone elastomer | non-woven polyester | 15.4 | 20 | flat sheet |
| 6 | silicone elastomer | ePTFE membrane | 16.4 | 30 | flat sheet |
| 7 | silicone elastomer | ePTFE membrane | 16.4 | 30 | flat sheet |

| | | | | | |
|---|---|---|---|---|---|
| n/a = not applicable | | | | | |

**TABLE 2**

| **Example** | **Article Shape** | **Thickness (mm)** | **Inner Dia. (mm)** | **Max Tensile Strength (MPa)** | **Elongation @ Max Tensile Strength (%)** | **Max Tensile Strength (MPa) @ 125 deg C** | **Tensile Strength @ 50% Elongation (MPa)** | **Tensile Strength @ 100% Elongation (MPa)** | **Tear Strength (kg/cm)** | **Durometer (Shore A)** | **Cycles to Failure** |
|---|---|---|---|---|---|---|---|---|---|---|---|
| 1 | flat sheet | 2.1 | n/a | 12.3 | 223 | n/a | 2.0 | 4.8 | 95.3 | 67.5 | n/a |
| Comparative A | flat sheet | 2.0 | n/a | 5.5 | 415 | n/a | 0.4 | 0.8 | 5.0 | 50.4 | n/a |
| Comparative B | flat sheet | 2.4 | n/a | 8.6 | 834 | n/a | 0.9 | 1.3 | 24.7 | 56.0 | n/a |
| 2a | flat sheet | 2.3 | n/a | 5.0 | 167 | n/a | 0.8 | 2.1 | 30.3 | 57.0 | n/a |
| 2b | flat sheet | 2.2 | n/a | 8.2 | 94 | n/a | 4.6 | sample broke at 94% | 77.4 | 74.2 | n/a |
| 3 | tube | 2.4 | 6.4 | 5.6 | 63 | n/a | 4.6 | sample broke at 63% | n/a | not available | 14,400,000 |
| Comparative C | tube | 2.4 | 6.4 | 2.6 | 78 | n/a | 1.0 | sample broke at 78% | n/a | not available | 4,200 |
| Comparative D | tube | 2.4 | 6.4 | 4.8 | 507 | n/a | 0.8 | 1.0 | n/a | not available | 9,000 |
| 4 | flat sheet | 2.5 | n/a | 12.1 | 158 | 6.2 | 5.3 | 7.1 | 92.9 | 80.1 | n/a |
| Comparative E | flat sheet | 2.2 | n/a | 17.1 | 801 | 4.0 | 0.8 | 1.2 | 25.1 | 61.6 | n/a |
| 5 | flat sheet | 2.5 | n/a | 6.6 | 37 | n/a | sample broke at 37% | sample broke at 37% | 58.0 | 84.9 | n/a |
| 6 | flat sheet | 2.2 | n/a | 6.1 | 94 | n/a | 3.8 | sample broke at 94% | 49.8 | 78.0 | n/a |
| 7 | flat sheet | 2.2 | n/a | 5.3 | 86 | n/a | 2.9 | sample broke at 86% | 49.0 | 71.9 | n/a |

| | | | | | | | | | | | |
|---|---|---|---|---|---|---|---|---|---|---|---|
| n/a = not applicable | | | | | | | | | | | |

### Example 1 - Silicone Flat Sheet with ePTFE

Amorphously locked expanded PTFE membrane was obtained having the following properties: 0.02 mm thickness, 0.44 g/cc density, 0.20 MPa EBP, 59.2 MPa matrix tensile strength in one direction, and 106.7 MPa matrix tensile strength in the orthogonal direction. The tests were conducted as previously described. At least about 100 layers of the membrane were stacked and subsequently cut into about 1.3 cm x 1.3 cm square pieces.

Medical grade liquid silicone elastomer (part number SLE 5700, Momentive Performance Materials, Inc., Albany, NY) was obtained and the two parts were mixed in accordance with the manufacturer's instructions.

A dough mixer was obtained (model number PM20, Planetary Mixer, Berkel Company, South Bend, IN). The mixing bowl was placed on a scale and tared. The ePTFE square pieces and the elastomer were combined in the mixing bowl in the proportion of 16.4% ePTFE by volume of the total composition volume (about 30% ePTFE by weight of the total composition volume). Blending of the materials was achieved using a flat batter beater (part number PM20-00045, South Bend, IN) and the mixer set to speed 1 for a period of about 2 hours to create an elastomer mixture. Blending was performed until the elastomer mixture visually exhibited a uniform consistency, i.e., the ePTFE square pieces were observed to be uniformly dispersed and wet out by the elastomer.

A 70 g amount of the elastomer mixture was placed into a 15.2 cm by 15.2 cm single cavity tensile slab mold, (ASTM D3182 mold, Leverette A Anderson Company Copley, OH) to create a square sample. The mold was closed and placed between the heated platens of a press (Carver model M press, Carver Inc Wabash, IN). The platen temperatures were set to 165 deg C. The mold was pressurized under 4536 kg force for about 15 min.

The mold was removed from the press. The flat sheet sample was removed from the mold and quenched in water. The flash was trimmed and the sample was further heat treated by placing in a forced air oven set to 165 deg C for about 15 hours. The flat sheet was removed from the oven and allowed to cool.

Samples from the flat sheet were then tested to characterize the physical properties. Tests were performed in accordance with the methods previously described.

The following test results were obtained: 2.1 mm thickness, 12.3 MPa tensile strength, 223% elongation at maximum tensile strength, 2.0 MPa tensile strength at 50% elongation, 4.8 MPa tensile strength at 100% elongation, 95.3 kg/cm tear strength, and 67.5 shore A durometer. An optical micrograph of the cross-section of the article is shown in Figure 1. The bar in the lower right hand corner of the figure corresponds to a length of 200 microns.

### Comparative Example A - Silicone Flat Sheet without ePTFE

A flat sheet was constructed and tested as described in Example 1 except that no ePTFE was added to the elastomer and, hence, no blending process was performed.

The following test results were obtained: 2.0 mm thickness, 5.5 MPa tensile strength, 415% elongation at maximum tensile strength, 0.4 MPa tensile strength at 50% elongation, 0.8 MPa tensile strength at 100% elongation, 5.0 kg/cm tear strength, and 50.4 shore A durometer.

### Comparative Example B - Flat Sheet Made with Commercially Available Silica-filled Silicone

Commercially available silica-filled silicone elastomer (Silbione® HCRA 4160, Bluestar Silicones, Inc., East Brunswick, NJ) was obtained, molded and tested in the same manner as described in Example 1.

The following test results were obtained: 2.4 mm thickness, 8.6 MPa tensile strength, 834% elongation at maximum tensile strength, 0.9 MPa tensile strength at 50% elongation, 1.3 MPa tensile strength at 100% elongation, 24.7 kg/cm tear strength, and 56.0 shore A durometer.

### Example 2a - Silicone Flat Sheet with Low Percent Loading of ePTFE

A flat sheet was constructed and tested as described in Example 1 except that 4.8% ePTFE membrane by volume of the total composition volume (about 10% ePTFE membrane by weight of the total composition volume) was added to the silicone.

The following test results were obtained: 2.3 mm thickness, 5.0 MPa maximum tensile strength, 167% elongation at maximum tensile strength, 0.8 MPa tensile strength at 50% elongation, 2.1 MPa tensile strength at 100% elongation, 30.3 kg/cm tear strength, and 57.0 shore A durometer. An optical micrograph of the cross-section of the article is shown in Figure 2. The bar in the lower right hand corner of the figure corresponds to a length of 200 microns.

### Example 2b. - Silicone Flat Sheet with High Percent Loading of ePTFE

A flat sheet was constructed and tested as described in Example 1 except that 23.4% ePTFE membrane by volume of the total composition volume (about 40% ePTFE membrane by weight of the total composition volume) was added to the silicone.

The following test results were obtained: 2.2 mm thickness, 8.2 MPa maximum tensile strength, 94% elongation at maximum tensile strength, 4.6 MPa tensile strength at 50% elongation, 77.4 kg/cm tear strength, and 74.2 shore A durometer.

A value for tensile strength at 100% elongation was not obtained because the sample broke at 94% elongation. An optical micrograph of the cross-section of the article is shown in Figure 3. The bar in the lower right hand corner of the figure corresponds to a length of 200 microns.

### Example 3 - Silicone Tubing with ePTFE

Size 24 tubes were constructed in the following manner. A 50 mm diameter manually-operated screw extruder with a transition die was obtained. A 6.3.5 mm diameter mandrel was obtained and fitted with 2.5 cm long silicone bushings (ASTP-24ELP, W. L. Gore & Associates, Inc., Elkton, MD) at both ends, secured with shaft collars. The bushings served to center the mandrel in the mold as well as to prevent flow of the elastomer out of the mold. Consequently, the distance between the bushings on the mandrel was 260 cm. A two-piece aluminum tube mold, 30.5 cm long and 11.1 mm diameter, was obtained. With the mandrel positioned inside the mold, the mold was assembled and secured with bolts. A connector fitting having 6.4 mm diameter was used to connect the transition die to the mold.

The elastomer blend of Example 1 was placed inside the extruder barrel. The extruder screw was turned thereby forcing the blended material out of the extruder barrel and into the mold. The screw was turned until blended material was observed exiting the mold through the parting line. A laboratory stirrer (Model 138, Talboys Engineering Corp., Montrose, PA) was connected to a drill chuck which was secured to one end of the mandrel. The mandrel was rotated at a rate of 16.9 rpm for 30 seconds. The stirrer was removed from the mandrel and the tube mold with mandrel was then removed from the connector fitting. The hole in the mold that was adapted to receive the connector fitting was plugged with an appropriate sized fitting.

The mold was placed into a heated press and processed as described in Example 1 except that the mold was quenched in water subsequent to the compression step, the mold was opened and the flash was trimmed from the tube, and the mandrel was removed from the tube. The tube was then heated as described in Example 1. The tube was removed from the oven and allowed to cool.

The tube sample was then tested as previously described to characterize the physical properties. The following test results were obtained: 2.4 mm wall thickness, 6.4 mm inner diameter, 5.6 MPa maximum tensile strength, 63% elongation at maximum tensile strength, 4.6 MPa tensile strength at 50% elongation, and 14,400,000 cycles to failure in the roller pump test. A value for tensile strength at 100% elongation was not obtained because the sample broke at 63% elongation.

### Comparative Example C - Silicone Tubing without ePTFE

Size 24 tubes were constructed and tested in the same manner as described in Example 3 except that no ePTFE was added to the elastomer and, hence, no blending process was performed and the mandrel was not rotated.

The following test results were obtained: 2.4 mm wall thickness, 6.4 cm inner diameter, 2.6 MPa maximum tensile strength, 78% elongation at maximum tensile strength, 1.0 MPa tensile strength at 50% elongation, and 4200 cycles to failure in the roller pump test. A value for tensile strength at 100% elongation was not obtained because the sample broke at 78% elongation.

### Comparative Example D - Commercial Silicone Tubing with Silica

Commercially available size 24 peristaltic pump tubing (ASTP-24ELP, W.L. Gore & Associates, Inc., Elkton, MD) was obtained and tested in the same manner as described in Example 3. This tubing is comprised of silica-filled silicone.

The following test results were obtained: 2.4 mm wall thickness, 6.4 cm inner diameter, 4.8 MPa maximum tensile strength, 507% elongation at maximum tensile strength, 0.8 MPa tensile strength at 50% elongation, 1.0 MPa tensile strength at 100% elongation. and 9,000 cycles to failure in the roller pump test.

### Example 4 - Viton Fluoroelastomer Flat Sheet with ePTFE

A flat sheet was constructed and tested as described in Example 1 with the following exceptions. Instead of using silicone elastomer, a fluoroelastomer was used. A mixture of 66% methyl ethyl ketone (52600890, Coyne Chemical, Croydon, PA) 30% fluoroelastomer (MCWLG60MB, Eagle Elastomer, Peninsula, OH), 2% allylcanurate (DIAK 7, RT Vanderbilt Company, Norwalk, CT), 2% organic peroxide (59123, Ashland Distribution, Dublin, OH) was obtained. A laboratory mixer (Stir-Pac, Cole-Parmer Instrument Co., Vernon Hills, IL) was obtained. The 2.5 liter plastic mixing container was placed on a scale and tared. The ePTFE square pieces and the fluoroelastomer were combined in the plastic mixing container in the proportion of 15.0 % ePTFE by volume of total solids (about 17.0 % ePTFE by weight of total solids).

Blending of the materials was achieved using a three blade mixer propeller and the mixer set to speed 10 (about 2300 rpm) for a period of about 2 hours to create an elastomer mixture. Blending was performed until the elastomer mixture visually exhibited a uniform consistency, i.e., the ePTFE square pieces were observed to be uniformly dispersed and wet out by the elastomer and solvent. The elastomer mixture was cast out into a shallow pan of dimensions 38 cm by 51 cm and spread to a thickness of about 1.2 cm. The material was placed in a forced air oven set to 80 deg C for about 15 hours to remove the solvent. The dry flat sheet was removed from the oven and allowed to cool.

About 130 g of the flat sheet was cut to approximate the mold dimensions of the mold described in Example 1 and then placed in the mold. The mold was heated and compressed as described in Example 1. Samples from the flat sheet were then tested to characterize the physical properties. Tests were performed in accordance with the methods previously described.

The following test results were obtained: 2.5 mm thickness, 12.1 MPa tensile strength, 6.2 MPa tensile strength at 125 deg C, 158 % elongation at maximum tensile strength, 5.3 MPa tensile strength at 50% elongation, 7.1 MPa tensile strength at 100% elongation, 92.9 kg/cm tear strength, and 80.1 shore A durometer.

### Comparative Example E - Viton Fluoroelastomer Flat Sheet without ePTFE

A flat sheet was constructed and tested in the same manner as described in Example 4 except that no ePTFE was added to the elastomer and, hence, no blending process was performed.

Samples from the flat sheet were then tested to characterize the physical properties. Tests were performed in accordance with the methods previously described.

The following test results were obtained: 2.2 mm thickness, 17.1 MPa tensile strength, 4.0 MPa tensile strength at 125 deg C, 801% elongation at maximum tensile strength, 0.8 MPa tensile strength at 50% elongation, 1.2 MPa tensile strength at 100% elongation, 25.1 kg/cm tear strength, and 61.6 shore A durometer.

### Example 5 - Silicone Flat Sheet with Non-woven Polyester

A flat sheet was constructed and tested as described in Example 1 except that a 40 gram per meter² non-woven polyester (40GSM Cranemat, Crane Nonwovens, Inc. Dalton, MA) was substituted for the ePTFE membrane and blended with the elastomer as follows. Discrete square (approximately 1.3 mm x 1.3 mm) pieces of the non-woven polyester material and the elastomer were combined in the mixing bowl in the proportion of 15.4% non-woven material by volume of the total composition volume (about 20% non-woven material by weight of the total composition volume).

The following test results were obtained: 2.5 mm thickness, 6.6 MPa tensile strength, 37 % elongation at maximum tensile strength, 58.0 kg/cm tear strength, and 84.9 shore A durometer. Data for tensile strength at 50% and 100% elongation could not be obtained because the sample broke below 50%, at 37%.

### Example 6 - Silicone Flat Sheet with an Alternative ePTFE Structure

A flat sheet was constructed and tested as described in Example 1 except that a different ePTFE membrane material was substituted for the ePTFE membrane of Example 1. The amorphously locked ePTFE of this example had the following properties: 0.077 mm thickness, 0.21 g/cc density, 0.008 MPa EBP, 67.1 MPa matrix tensile strength in one direction, and 132.2 MPa matrix tensile strength in the orthogonal direction.

The following test results were obtained for the flat sheet: 2.2 mm thickness, 6.1 MPa tensile strength, 94 % elongation at maximum tensile strength, 3.8 MPa tensile strength at 50% elongation, 49.8 kg/cm tear strength, and 78.0 shore A durometer. Data for tensile strength at 100% elongation could not be obtained because the sample broke below 100%, at 94%.

### Example 7 - Silicone Flat Sheet with an Alternative ePTFE Structure

A flat sheet was constructed and tested as described in Example 1 except that a different ePTFE membrane material was substituted for the ePTFE membrane of Example 1 and the blending step was extended by at least 5 hours in order to improve the blending of the materials. Even with this longer blending process, the resultant material did not achieve the same level of uniformity as achieved with the blended material of Example 1.

The amorphously locked ePTFE of this example had the following properties: 0.005 mm thickness, 1.02 g/cc density, 0.62 MPa EBP, 832.7 MPa matrix tensile strength in one direction, and 255.4 MPa matrix tensile strength in the orthogonal direction.

The following test results were obtained for the flat sheet: 2.2 mm thickness, 5.3 MPa tensile strength, 86% elongation at maximum tensile strength, 2.9 MPa tensile strength at 50% elongation, 49.0 kg/cm tear strength, and 71.9 shore A durometer. Data for tensile strength at 100% elongation could not be obtained because the sample broke below 100%, at 86%.

The disclosure includes compositions and processes for making such compositions in accordance with the following clauses:
1. A composition comprising an elastomer and discrete pieces of porous material distributed throughout said elastomer.
2. A composition as defined in clause 1 wherein said porous material comprises expanded polytetrafluoroethylene (PTFE).
3. A composition as defined in clause 1 further comprising a tensile stress greater than about 1 MPa at 50% elongation.
4. A composition as defined in clause 1 further comprising a tensile stress greater than about 1.5 MPa at 50% elongation.
5. A composition as defined in clause 1 further comprising a tensile stress greater than about 2 MPa at 100% elongation.
6. A composition as defined in clause 1 further comprising a tensile stress greater than about 3 MPa at 100% elongation.
7. A composition as defined in clause 1 further comprising a tensile stress greater than about 4 MPa at 100% elongation.
8. A composition as defined in clause 1 further comprising a tear strength greater than about 25 kg/cm.
9. A composition as defined in clause 1 further comprising a tear strength greater than about 50 kg/cm.
10. A composition as defined in clause 1 further comprising a tear strength greater than about 75 kg/cm.
11. A composition as defined in clause 1 which is adapted for injection molding, compression molding, and extrusion.
12. A composition as defined in clause 2 wherein said discrete pieces of expanded PTFE are present in an amount of between about 2 and 60 percent by volume of the volume of the composition.
13. A composition as defined in clause 2 wherein said discrete pieces of expanded PTFE are present in an amount of between about 4 and 40 percent by weight of the weight of the composition.
14. A composition as defined in clause 2 wherein said discrete pieces of expanded PTFE are present in an amount of between 10 and 20 percent by by volume of the volume of the composition.
15. A composition as defined in clause 2 wherein said discrete pieces of expanded PTFE are present in an amount of between about 20 and 35 percent by weight of the weight of the composition.
16. A composition as defined in clause 2 wherein said discrete pieces of expanded PTFE are present in an amount of about 16 percent by volume of the volume of the composition.
17. A composition as defined in clause 2 wherein said discrete pieces of expanded PTFE are present in an amount of about 30 percent by weight of the weight of the composition.
18. A composition as defined in clause 1 wherein said elastomer is a liquid or liquidified crosslinkable elastomer selected from the group consisting of silicone, fluoroelastomer, perfluoroelastomer, and perfluoropolyether.
19. A composition as defined in clause 1 wherein said composition has a maximum tensile strength of at least 200% of the maximum tensile strength of said elastomer alone.
20. A composition as defined in clause 1 wherein said porous material comprises porous polyester.
21. A composition as defined in clause 20 further comprising a tensile stress greater than about 2 MPa at 25% elongation.
22. A composition as defined in clause 20 further comprising a tear strength greater than about 25 kg/cm.
23. A composition as defined in clause 1 in the form of a flat sheet.
24. A composition as defined in clause 1 in the form of an O-ring.
25. A composition as defined in clause 1 in the form of a gasket.
26. A composition as defined in clause 1 in the form of a diaphragm.
27. A composition as defined in clause 1 in the form of a mechanical seal.
28. A composition as defined in clause 1 in the form of a vascular graft
29. A composition comprising an elastomer and discrete pieces of expanded PTFE distributed throughout said elastomer in the form of a tube and further comprising greater than about 1 hour of pump life at 0.3 MPa pump pressure and 600 RPM.
30. A composition as defined in clause 29 further comprising greater than about 10 hours of pump life at 0.3 MPa pump pressure and 600 RPM.
31. A composition as defined in clause 29 further comprising greater than about 50 hours of pump life at 0.3 MPa pump pressure and 600 RPM.
32. A composition as defined in clause 29 further comprising greater than about 100 hours of pump life at 0.3 MPa pump pressure and 600 RPM.
33. A composition as defined in clause 29 wherein said discrete pieces of expanded PTFE are substantially circumferentially aligned.
34. A composition as defined in clause 29 wherein said elastomer is silicone.
35. A process for making a reinforced elastomer composition comprising the steps of: (e) providing an elastomer; (f) providing an expanded PTFE membrane; (g) chopping said expanded PTFE membrane into discrete pieces; and (h) blending said discrete pieces into said elastomer using a shear mixer to form said reinforced elastomer.
36. A process as defined in clause 35 further comprising extruding said reinforced elastomer into a desired shape.
37. A process as defined in clause 35 further comprising injection molding said reinforced elastomer into a desired shape.

## Claims

1. A composition comprising an elastomer and discrete pieces of porous material of polytetrafluoroethylene (PTFE) distributed throughout said elastomer, wherein the porous material comprises expanded polytetrafluoroethylene (ePTFE) and the ePTFE material is a membrane.

2. The composition of claim 1, wherein the ePTFE material is amorphously locked.

3. A composition as defined in claim 1, further comprising:
(a) a tensile stress greater than about 1 MPa at 50% elongation, or
(b) a tensile stress greater than about 1.5 MPa at 50% elongation, or
(c) a tensile stress greater than about 2 MPa at 100% elongation, or
(d) a tensile stress greater than about 3 MPa at 100% elongation, or
(e) a tensile stress greater than about 4 MPa at 100% elongation, or
wherein the tensile stress is determined using a tensile test machine with the following conditions: 7.6 cm grip separation and 30.5 cm/min cross-head speed.

4. A composition as defined in claim 1 further comprising:
(a) a tear strength greater than about 25 kg/cm, or
(b) a tear strength greater than about 50 kg/cm, or
(c) a tear strength greater than about 75 kg/cm,
wherein the tear strength is determined using a tensile test machine using the following conditions: 7.6 cm grip separation and 30.5 cm/min cross-head speed, wherein the tear strength is calculated by dividing the peak force value by the thickness of a test sample.

5. A composition as defined in claim1 wherein
(a) said discrete pieces of ePTFE membrane are present in an amount of between about 2 and 60 percent by volume of the volume of the composition, or
(b) said discrete pieces of ePTFE membrane are present in an amount of between about 4 and 40 percent by weight of the weight of the composition, or
(c) said discrete pieces of ePTFE membrane are present in an amount of between 10 and 20 percent by volume of the volume of the composition, or
(d) said discrete pieces of ePTFE membrane are present in an amount of between about 20 and 35 percent by weight if the weight of the composition, or
(e) said discrete pieces of the ePTFE membrane are present in an amount of about 16 percent by volume of the volume of the composition, or
(f) said discrete pieces of ePTFE membrane are present in an amount of about 30 percent by weight of the weight of the composition.

6. A composition as defined in claim 1 wherein said elastomer is a liquid or liquified crosslinkable elastomer selected from the group consisting of silicone, fluoroelastomer, perfluoroelastomer, and perfluoropolyether.

7. A composition as defined in claim 1 wherein said composition has a maximum tensile strength of at least 200% of the maximum tensile strength of said elastomer alone, wherein the tensile strength is determined using a tensile test machine with the following conditions: 7.6 cm grip separation and 30.5 cm/min cross-head speed.

8. Use of a composition as defined in claim 1 for forming a flat sheet, an O-ring, a gasket, a diaphragm, a mechanical seal or a vascular graft.

9. Use of the composition as defined in claim 1 for injection molding, compression molding and extrusion.

10. A flat sheet, an O-ring, a gasket, a diaphragm, a mechanical seal or a vascular graft comprising the composition according to claim 1.

11. A process for making a reinforced elastomer composition comprising the steps:
(a) providing an elastomer;
(b) providing an ePTFE membrane;
(c) chopping said ePTFE membrane into discrete pieces; and
(d) blending said discrete pieces into said elastomer using a shear mixer to form said reinforce elastomer.

12. The process as defined in claim 11 further comprising the step:
(e) extruding said reinforced elastomer into a desired shape, or injection molding said reinforced elastomer into a desired shape.

## Patentansprüche

1. Zusammensetzung, die ein Elastomer und separate Stücke aus porösem Material aus Polytetrafluorethylen (PTFE), die durch das Elastomer verteilt sind, umfasst, wobei das poröse Material expandiertes Polytetrafluorethylen (ePTFE) umfasst, und wobei das ePTFE-Material eine Membran ist.

2. Zusammensetzung nach Anspruch 1, wobei das ePTFE-Material amorph verriegelt ist.

3. Zusammensetzung nach Anspruch 1, ferner umfassend:
(a) eine Zugfestigkeit von mehr als etwa 1 MPa bei 50% Dehnung; oder
(b) eine Zugfestigkeit von mehr als etwa 1,5 MPa bei 50% Dehnung; oder
(c) eine Zugfestigkeit von mehr als etwa 2 MPa bei 100% Dehnung; oder
(d) eine Zugfestigkeit von mehr als etwa 3 MPa bei 100% Dehnung; oder
(e) eine Zugfestigkeit von mehr als etwa 4 MPa bei 100% Dehnung; oder
wobei die Zugfestigkeit bestimmt wird unter Verwendung einer Zugfestigkeitsvorrichtung mit den folgenden Bedingungen: einer Einspannlänge von 7,6 cm und einer Traversengeschwindigkeit von 30,5 cm/Minute.

4. Zusammensetzung nach Anspruch 1, ferner umfassend:
(a) eine Reißfestigkeit von mehr als 25 kg/cm; oder
(b) eine Reißfestigkeit von mehr als 50 kg/cm; oder
(c) eine Reißfestigkeit von mehr als 75 kg/cm;
wobei die Reißfestigkeit bestimmt wird unter Verwendung einer Zugfestigkeitsvorrichtung mit den folgenden Bedingungen: einer Einspannlänge von 7,6 cm und einer Traversengeschwindigkeit von 30,5 cm/Minute, wobei die Reißfestigkeit berechnet wird durch Division des Spitzenkraftwertes durch die Dicke eines Prüflings.

5. Zusammensetzung nach Anspruch 1, wobei:
(a) die separaten Stücke aus ePTFE-Membran in einer Menge zwischen etwa 2 und 60 Volumenprozent des Volumens der Zusammensetzung vorhanden sind; oder
(b) die separaten Stücke aus ePTFE-Membran in einer Menge zwischen etwa 4 und 40 Volumenprozent des Volumens der Zusammensetzung vorhanden sind; oder
(c) die separaten Stücke aus ePTFE-Membran in einer Menge zwischen etwa 10 und 20 Volumenprozent des Volumens der Zusammensetzung vorhanden sind; oder
(d) die separaten Stücke aus ePTFE-Membran in einer Menge zwischen etwa 20 und 35 Volumenprozent des Volumens der Zusammensetzung vorhanden sind; oder
(e) die separaten Stücke aus ePTFE-Membran in einer Menge von etwa 16 Volumenprozent des Volumens der Zusammensetzung vorhanden sind; oder
(f) die separaten Stücke aus ePTFE-Membran in einer Menge von etwa 30 Volumenprozent des Volumens der Zusammensetzung vorhanden sind

6. Zusammensetzung nach Anspruch 1, wobei das Elastomer ein flüssiges oder verflüssigtes, vernetzbares Elastomer ist, ausgewählt aus der Gruppe bestehend aus Silikon, Fluorelastomer, Perfluorelastomer und Perfluorpolyether.

7. Zusammensetzung nach Anspruch 1, wobei die Zusammensetzung eine maximale Zugfestigkeit von mindestens 200% der maximalen Zugfestigkeit des Elastomers alleine aufweist, wobei die Zugfestigkeit bestimmt wird unter Verwendung einer Zugfestigkeitsvorrichtung mit den folgenden Bedingungen: einer Einspannlänge von 7,6 cm und einer Traversengeschwindigkeit von 30,5 cm/Minute.

8. Verwendung einer Zusammensetzung nach Anspruch 1 zur Gestaltung einer flachen Bahn, eines O-Rings, einer Dichtung, einer Membran, einer mechanischen Dichtung oder eines Gefäßersatzes.

9. Verwendung einer Zusammensetzung nach Anspruch 1 zum Spritzgießen, Formpressen und Extrudieren.

10. Flache Bahn, O-Ring, Dichtung, Membran, mechanische Dichtung oder Gefäßersatz, die Zusammensetzung nach Anspruch 1 umfassend.

11. Verfahren zur Herstellung einer verstärkten Elastomerzusammensetzung, wobei das Verfahren die folgenden Schritte umfasst:
(a) Bereitstellen eines Elastomers;
(b) Bereitstellen einer ePTFE-Membran;
(c) Zerkleinern der ePTFE-Membran in separate Stücke; und
(d) Mischen der separaten Stücke in das Elastomer unter Verwendung eines Shear-Mischers, um das verstärkte Elastomer zu erzeugen.

12. Verfahren nach Anspruch 11, das ferner den folgenden Schritt umfasst:
(e) Extrudieren des verstärkten Elastomers in eine gewünschte Form, oder Spritzgießen des verstärkten Elastomers in eine gewünschte Form.

## Revendications

1. Composition comprenant un élastomère et des morceaux discrets de matériau poreux de polytétrafluoroéthylène (PTFE) répartis à travers ledit élastomère, le matériau poreux comprenant du polytétrafluoroéthylène expansé (ePTFE) et le matériau ePTFE étant une membrane.

2. Composition selon la revendication 1, le matériau ePTFE étant verrouillé de façon amorphe.

3. Composition selon la revendication 1, comprenant en outre :
(a) une contrainte de traction supérieure à environ 1 MPa à un allongement de 50 %, ou
(b) une contrainte de traction supérieure à environ 1,5 MPa à un allongement de 50 %, ou
(c) une contrainte de traction supérieure à environ 2 MPa à un allongement de 100 %, ou
(d) une contrainte de traction supérieure à environ 3 MPa à un allongement de 100 %, ou
(e) une contrainte de traction supérieure à environ 4 MPa à un allongement de 100 %, ou
la contrainte de traction étant déterminée à l'aide d'une machine d'essai de traction avec les conditions suivantes : distance de préhension de 7,6 cm et vitesse de traverse de 30,5 cm/min.

4. Composition selon la revendication 1 comprenant en outre :
(a) une résistance à la déchirure supérieure à environ 25 kg/cm, ou
(b) une résistance à la déchirure supérieure à environ 50 kg/cm, ou
(c) une résistance à la déchirure supérieure à environ 75 kg/cm,
la résistance à la déchirure étant déterminée à l'aide d'une machine d'essai de traction à l'aide des conditions suivantes : distance de préhension de 7,6 cm et vitesse de traverse de 30,5 cm/min, la résistance à la déchirure étant calculée en divisant la valeur de la force maximale par l'épaisseur d'un échantillon d'essai.

5. Composition selon la revendication 1,
(a) lesdits morceaux discrets de membrane ePTFE étant présents en une quantité comprise entre environ 2 et 60 pour cent en volume du volume de la composition, ou
(b) lesdits morceaux discrets de membrane ePTFE étant présents en une quantité comprise entre environ 4 et 40 pour cent en poids du poids de la composition, ou
(c) lesdits morceaux discrets de membrane ePTFE étant présents en une quantité comprise entre 10 et 20 pour cent en volume du volume de la composition, ou
(d) lesdits morceaux discrets de membrane ePTFE étant présents en une quantité comprise entre environ 20 et 35 pour cent en poids du poids de la composition, ou
(e) lesdits morceaux discrets de la membrane ePTFE étant présents en une quantité égale à environ 16 pour cent en volume du volume de la composition, ou
(f) lesdits morceaux discrets de la membrane ePTFE étant présents en une quantité égale à environ 30 pour cent en poids du poids de la composition.

6. Composition selon la revendication 1, ledit élastomère étant un élastomère réticulable liquide ou liquéfié choisi dans le groupe consistant en silicone, fluoroélastomère, perfluoroélastomère et perfluoropolyéther.

7. Composition selon la revendication 1, ladite composition ayant une résistance maximale à la traction égale à au moins 200 % de la résistance maximale à la traction dudit élastomère seul, la résistance à la traction étant déterminée à l'aide d'une machine d'essai de traction avec les conditions suivantes : distance de préhension de 7,6 cm et vitesse de traverse de 30,5 cm/min.

8. Utilisation d'une composition selon la revendication 1 pour former une feuille plane, un joint torique, un joint d'étanchéité, une membrane, un joint mécanique ou un greffon vasculaire.

9. Utilisation de la composition selon la revendication 1 pour un moulage par injection, un moulage par compression et une extrusion.

10. Feuille plane, joint torique, joint d'étanchéité, membrane, joint mécanique ou greffon vasculaire comprenant la composition selon la revendication 1.

11. Procédé de fabrication d'une composition élastomère renforcée comprenant les étapes suivantes :
(a) fourniture d'un élastomère ;
(b) fourniture d'une membrane ePTFE ;
(c) découpe de ladite membrane ePTFE en morceaux discrets ; et
(d) mélange desdits morceaux discrets dans ledit élastomère en utilisant un mélangeur à cisaillement pour former ledit élastomère de renforcement.

12. Procédé selon la revendication 11, comprenant en outre l'étape suivante :
(e) extrusion dudit élastomère renforcé dans une forme souhaitée, ou moulage par injection dudit élastomère renforcé dans une forme souhaitée.
